# EUROPÄISCHE PATENTANMELDUNG

(11) **EP 4 451 516 A1**
(43) Veröffentlichungstag der Anmeldung: **23.10.2024**
(21) Anmeldenummer: 23193982.8
(22) Anmeldetag: 29.08.2023
(51) Int. Cl.: H02J 50/12, H02J 50/80, H02J 50/10

(54) **CLOSED LOOP EFFICIENCY OPTIMISATION**

(30) Priorität: 20.04.2023 EP 23168841; 02.08.2023 EP 23189230
(71) Anmelder: Georg Fischer Rohrleitungssysteme AG, 8201 Schaffhausen (CH)
(72) Erfinder: Hufschmid, Elmar, 79774 Albbruck (DE); Selvaggi, Yuri, 8057 Zürich (CH); Signer, Reto, 8623 Wetzikon (CH); Bleuler, Andy, 5621 Zufikon (CH); Hartmann, Thomas, 88212 Ravensburg (DE); Ciobanu, Calin, Brea, CA 92821 (US)
(74) Vertreter: Fenner, Seraina

(57) **Zusammenfassung**

Verfahren zur optimierten drahtlosen Energieübertragung zwischen zwei Spulen, durch Übertragen von Energie einer Spule einer Primärseite an eine Spule auf einer Sekundärseite, wobei mittels eines ADCs eine, an einem auf der Sekundärseite angeordneten Speicher / Kondensator, vorliegende Ladespannung bzw. der Ladezustand ermittelt wird, wobei eine MCU an die Primärseite über eine Datenschnittstelle eine Energieanforderung aufgrund der am sekundärseitigen Speicher / Kondensator vorliegenden Ladespannung übermittelt und aufgrund dessen die Energieübertragung zwischen der Primärseite und der Sekundärseite geregelt wird.

## Beschreibung

Die Erfindung betrifft ein Verfahren zur optimierten drahtlosen Energieübertragung zwischen zwei Spulen, durch Übertragen von Energie einer Spule einer Primärseite an eine Spule auf einer Sekundärseite, wobei mittels eines ADCs eine, an einem auf der Sekundärseite angeordneten Speicher / Kondensator, vorliegende Ladespannung bzw. Ladezustand konstant ermittelt wird.

Die Gesamteffizient einer drahtlosen Energieübertragung bei einer Spule ist u.a. eine Funktion der Stromaufnahme. Generell kann gesagt werden, dass je geringer der entnommene Strom ist, desto geringer ist der Wirkungsgrad. Jedoch muss die maximale Effizienz bzw. der beste Wirkungsgrad nicht bei einem maximalen Strom liegen, sondern kann bereits in einem oberen Bereich erreichbar sein. Wenn aber der Stromverbrauch gegen Null tendiert bricht die Effizienz des Systems zusammen und tendiert asymptotisch ebenfalls gegen null.

Es ist Aufgabe der Erfindung ein Verfahren vorzuschlagen, dass die Energieübertragung ausschliesslich in einem Leistungsbereich durchführt, bei dem ein hoher Wirkungsgrad vorliegt.

Diese Aufgabe wird erfindungsgemäss dadurch gelöst, dass eine MCU an die Primärseite über eine Datenschnittstelle eine Energieanforderung aufgrund der am sekundärseitigen Speicher / Kondensator vorliegenden Ladespannung übermittelt und aufgrund dessen die Energieübertragung zwischen der Primärseite und der Sekundärseite geregelt wird.

Das erfindungsgemässe Verfahren zur optimierten drahtlosen Energieübertragung zwischen zwei Spulen, durch Übertragen von Energie einer Spule einer Primärseite an eine Spule auf einer Sekundärseite, wird im hohen Leistungsbereich durchgeführt. Dazu wird mittels eines ADCs (Analog-Digital-Wandler) eine, an einem auf der Sekundärseite angeordneten Speicher oder Kondensator, vorliegende Ladespannung bzw. Ladezustand ermittelt, vorzugsweise konstant. Aufgrund der am sekundärseitigen Speicher / Kondensator vorliegenden Ladespannung, die vorzugsweise konstant ermittelt wird, übermittelt eine MCU an die Primärseite über eine Datenschnittstelle eine Energieanforderung. Aufgrund dessen wird die Energieübertragung der Primärseite geregelt. Es ist vorteilhaft, wenn die MCU auf der Sekundärseite angeordnet ist und mit dem ADC, welcher die Ladespannung des Speichers / Kondensators erfasst, kommuniziert. Des Weiteren ist es vorteilhaft, wenn die Datenschnittstelle eine separate Schnittstelle unabhängig von der Spule zur Energieübertragung ist. Vorzugsweise ist die Datenschnittstelle als optische Schnittstelle ausgebildet.

Als bevorzugte Ausführungsform hat sich gezeigt, wenn die MCU ein Signal zur maximalen Leistungslieferung bzw. Energieübertragung oder zum Pausieren der Energieübertragung an die Primärseite aufgrund des Ladezustands bzw. der vorliegenden Ladespannung des Speichers / Kondensators übermittelt. Vorzugsweise ist zur Regelung der Energieübertagung auf der Primärseite ebenfalls eine MCU angeordnet. Es ist vorteilhaft, wenn die MCU mittels ADC den Speicher bzw. Kondensator konstant überwacht und bei vollem bzw. beinahe vollem Ladezustand bzw. erreichter maximal Ladespannung die Primärseite über die Datenschnittstelle auffordert die Energieübertragung zu stoppen, beispielsweise durch Übermitteln einer Stoppaufforderung.

Es ist vorteilhaft, wenn für eine Stoppaufforderung eine Zeitspanne definiert ist, so dass während dieser Zeitspanne keine Energieübertragung von der Primär- zur Sekundärseite erfolgt. Nach Ablauf dieser Zeitspanne entscheidet die MCU ob aufgrund der vorliegenden Landespannung am Speicher / Kondensator eine weitere Stoppaufforderung gesendet werden soll oder die Ladespannung so gering ist, dass die Energieübertagung wiederaufgenommen werden kann. Es ist vorteilhaft, wenn dazu ein unterer Grenzwert der Ladespannung definiert ist. Wenn dieser durch den Stromverbrauch erreicht ist, sendet die MCU keine Stoppaufforderung mehr bis der Speicher / Kondensator wieder bis zu einem oberen Grenzwert aufgeladen ist. Vorzugsweise ist auch für den oberen Grenzwert ein Ladespannungswert definiert der dem vollen oder beinahe vollen Ladezustand des Speichers / Kondensators entspricht.

Als vorteilhaft hat sich gezeigt, wenn die Energieübertragung von der Primärseite auf die Sekundärseite mittels maximaler Leistung bzw. Energieübertragung erfolgt. Das heisst, solange eine Energieübertragung erfolgt bzw. andauert, wird mit der maximalen Ansteuerspannung konstant übertragen.

Es ist vorteilhaft, wenn während des Pausierens keine Energieübertragung erfolgt. Mittels dieser Ausführungsform der Energieübertragung wird ein periodisches Ein- und Ausschalten der Energieübertragung vermieden. Es erfolgt hingegen ein Einschalten mit maximaler konstanter Leistung, die über einen bestimmten Zeitraum gehalten wird, vorzugsweise auf einem konstanten Spannungsniveau, bis die Energieübertragung wieder ausgeschaltet wird und pausiert. Vorzugsweise erfolgt diese Leistungsübertragung mit maximaler Ansteuerspannung der Primärspule oder einer Ansteuerspannung der Primärspule, die unterhalb der maximalen Ansteuerspannung der Primärspule liegt.

Sobald die Primärseite eine Stoppaufforderung erhält, pausiert die Energieübertragung und die Ansteuerspannung liegt dann bei null. Wie oben erwähnt ist es vorteilhaft, wenn für das Pausieren eine Zeitdauer definiert wird nach der die MCU den Ladestand des Speichers / Kondensators überprüft oder die Überprüfung wird konstant durchgeführt. Alternativ kann auch eine Stoppaufforderung an die Primärseite übermittelt werden, der keine Zeitspanne zugeordnet ist, die durch eine Energieübertragungsaufforderung der MCU wieder aufgehoben und die Energieübertragung auf maximaler Leistung wieder aufgenommen wird.

Es ist vorteilhaft, wenn die Energieübertragungsaufforderung von der MCU übermittelt wird, wenn ein unterer Grenzwert der Ladespannung des Speichers / Kondensators erreicht ist. Die Stoppaufforderung wird auch hier vorzugsweise dann übermittelt, wenn eine beinahe oder volle Ladespannung des Speichers / Kondensators erreicht ist.

Alternativ übermittelt die MCU aufgrund des Ladezustands des Speichers / Kondensators der Sekundärseite eine Energieanforderung an die Primärseite, wobei die zu liefernde Leistungsmenge über eine periodisch ein und ausschaltende Energieübertragung mit bestimmtem Ein- und Aus-Verhältnis (duty cycle) geregelt wird. Es ist vorteilhaft, wenn die MCU den benötigten zur Energieübertragung angewandten duty cycle aufgrund der vorliegenden Ladespannung am Speicher / Kondensator ermittelt.

Es ist vorteilhaft, wenn der duty cycle in einem Toleranzbereich bzw. eine maximale Schwankung von +/- 10% zulässt, vorzugsweise +/- 5%. Es ist möglich, dass leichte Schwankungen im duty cycle auftreten, dies aber immer noch als unveränderter duty cycle angesehen wird.

Als alternative Ausführungsform übermittelt die MCU aufgrund des Ladezustands des Speichers / Kondensators der Sekundärseite eine Energieanforderung an die Primärseite, wobei die zu liefernde Leistungsmenge über die Ansteuerspannung der Primärspule geregelt wird. Im Vergleich zu den zuvor erwähnten Ausführungen, die die zu übertragende Leistungsmenge mit dem duty cycle regelt oder mit einem konstanten Einschalten oder Pausieren einer maximalen Energieübertragung, wird bei dieser Ausführungsform die zu übertagende Leistung mit der Ansteuerspannung geregelt. Das heisst, die Ansteuerspannung der Spule liegt hier nicht wie bei den anderen Ausführungsformen auf dem Maximum, sondern es wird eine konstante Ansteuerspannung der Primärspule aufgrund der Ladespannung des Kondensators / Speichers ermittelt, die während der Energieübertragung möglichst konstant gehalten wird und nicht die maximale Ansteuerspannung der Primärspule aufweist.

Selbstverständlich können die unterschiedlichen Ausführungsformen der Energieübertragung von der Primär- auf die Sekundärseite miteinander kombiniert werden. Das heisst, eine Energieübertragung, die konstant eine Leistung überträgt und bei erreichter Ladespannung des Kondensators / Speichers pausiert kann auch mit einer Ansteuerspannung der Primärspule erfolgen, die kleiner ist als die Maximalansteuerspannung.

Alternativ kann auch eine periodische Energieübertragung mit einem duty cycle mit einer Ansteuerspannung betrieben werden, die unter der Maximalansteuerspannung liegt.

Es ist vorteilhaft, wenn das erfindungsgemässe Verfahren zur drahtlosen Energieübertragung zwischen den Spulen für den Betrieb eines Sensors, Aktuators und/oder Controllers eingesetzt wird. Dies erleichtert das Auswechseln der Komponenten, wie auch die Aufnahme von z.B. unterschiedlichen Sensoren im selben Transmitter möglich sind. Es erhöht die Flexibilität und Kompatibilität der untereinander kombinierbaren Komponenten.

Vorzugsweise definiert die MCU aufgrund des Frequenzbereichs, des Spannungsbereichs oder des Leistungsbereichs die entsprechende Ausführungsform des anzuwendenden Verfahrens der Energieübertragung. Um einen hohen Wirkungsgrad zu erzielen, findet die Energieübertragung meist in einem hohen Leistungsbereich statt. Wie bereits erwähnt, kann dazu eine Leistungsübertragung mit konstanter Übertragung und einem Pausieren oder einem periodischen Ein- und Ausschalten mit geregeltem duty cycle ohne Pausieren, jeweils bei maximaler Ansteuerspannung oder aber auch bei einer Reglung der Ansteuerungsspannung der Spule unterhalb der Maximalansteuerspannung erfolgen. Welche Leistungsübertragung bzw. Energieübertragung angewandt wird ermittelt vorzugsweise die MCU. Alternativ kann auch die Energieübertragung für eine Anwendung vordefiniert werden.

Ein Ausführungsbeispiel der Erfindung wird anhand der Figuren beschrieben, wobei sich die Erfindung nicht nur auf das Ausführungsbeispiel beschränkt. Es zeigen:
Fig. 1 ein Schema zum erfindungsgemässen Verfahren und
Fig. 2 Diagramm unterschiedlicher Ausführungsformen des Energieübertragungsverfahrens.

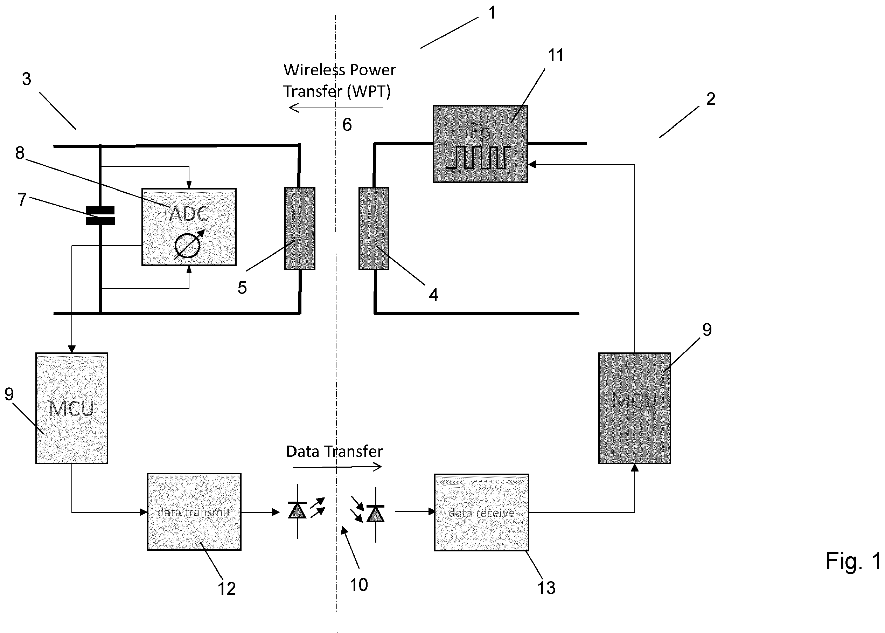

Das in Fig. 1 dargestellte Schema 1 zeigt die Anordnung von Bauteilen zur kontaktlosen Energieübertragung 6 zwischen zwei Spulen 4, 5. Die Spule 4 auf der Primärseite 2 überträgt eine von der Sekundärseite 3 angeforderte Leistung auf die Spule 5 inklusiv eines Gleichrichters auf der Sekundärseite. Um eine Energieübertragung immer in einem hohen Leistungsbereich durchzuführen, da dort meist der beste Wirkungsgrad auftritt, ist auf der Sekundärseite 3 ein Speicher / Kondensor 7 angeordnet, der die Energie vorübergehen speichert. Der ADC (Analog-Digital Wandler) 8 ermittelt die am Speicher / Kondensator 7 vorliegende Ladespannung bzw. den Ladezustand. Die vorliegende Ladespannung, welche vom ADC 8 ermittelt wird, wird von einer sekundärseitig angeordneten MCU 9 erfasst bzw. an diese weitergeleitet, welche dann die Energieübertragung 6 von der Spule 4 der Primärseite auf die Spule 5 der Sekundärseite regelt bzw. die entsprechende Energie- bzw. Leistungsanforderung an die Primärseite sendet, aufgrund dessen die Energieübertragung 6 geregelt wird. Das Signal zur Energieanforderung wird vorzugsweise über eine separat von den Spulen unabhängige Datenschnittstelle 10 übertragen. Es ist vorteilhaft, wenn zur Energie- und Leistungsreglung auf der Primärseite 2 eine weiter MCU 9 angeordnet ist.

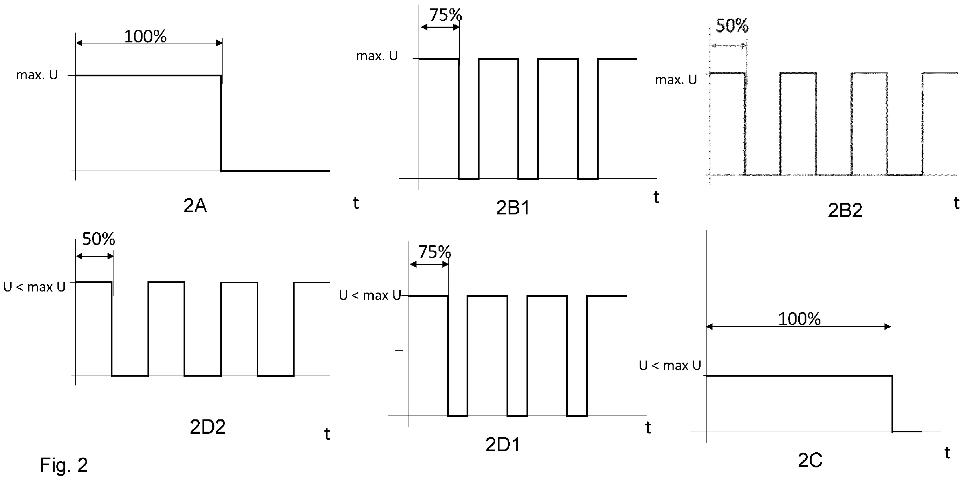

Aufgrund der Information der ADC 8, dass der Speicher / Kondensator 7 einen unteren Grenzwert der Ladespannung erreicht hat, sendet die MCU, vorzugsweise mittels einer Übermittlungseinheit 12, vorzugsweise über eine optische Datenschnittstelle 10 eine Anforderung für eine maximale Leistungslieferung von der Spule 4 der Primärseite zur Spule 5 der Sekundärseite. Die Leistungslieferung erfolgt beispielsweise mit einer konstanten maximalen Leistung, wie das in Fig. 2A ersichtlich ist. Hat der Ladezustand des Speichers / Kondensators 7 den vollen Ladezustand oder den beinahe vollen Ladezustand erreicht, wird dieser über den ADC 8 an die MCU der Sekundärseite weitergegeben, die eine Stoppaufforderung der Primärseite 2 übermittelt und die Leistungslieferung wird pausiert. Diese Energieübertragung mit einer maximalen konstanten Leistung überträgt andauernd und pausiert anschliessend, bis erneut ein Energiebedarf vorliegt, was in Figur 2A abgebildet ist. Vorzugsweise ist dem Pausieren eine Zeitspanne hinterlegt, damit nach dieser Zeitspanne die Ladespannung am Speicher /Kondensator erneut überprüft wird. Wenn immer noch ein Ladezustand vorliegt, der beinahe dem vollen Ladezustand entspricht, sendet die MCU erneut eine Stoppaufforderung. Ist der Ladezustand bereits wieder so tief, dass eine Energieübertragung 6 erfolgen kann, wird wieder eine maximale, konstante Energieübertragung umgesetzt. In Fig. 2C ist dieselbe Ausführungsform der Energieübertagung abgebildet jedoch auf einem tieferen Spannungsniveau als dem der Maximalansteuerspannung, was ebenso einen optimalen Wirkungsgrad zur Energieübertragung generieren kann. Die primärseitig angeordnete Empfangseinheit 13 soll die Stoppanforderungen sowie dessen Aufhebungen entsprechend umsetzen und vorzugsweise über eine MCU 9, die die Energieübertragung an eine Ansteuereinheit 11 für die Spule 4 weiterleiten. Alternativ zu dieser Ausführungsform des Verfahrens besteht auch die Möglichkeit, dass aufgrund der ermittelten Ladespannung durch den ADC die MCU eine Leistung im oberen Bereich eruiert, die mittels eines laufend angepassten duty cycles geregelt wird und durch eine periodische Energieübertragung ausgeführt wird. Die zu liefernde Leistungsmenge wird hierbei über den duty cycle der periodisch übertragenen Energie geregelt. Das heisst das Übertragen und Unterbrechen wiederholt sich in regelmässigen Abständen. Hierbei wird keine konstante Energieübertragung oder ein Pausieren umgesetzt. Diese Variante des Verfahrens mit maximaler Ansteuerspannung ist in Figur 2B1 und 2B2 abgebildet mit einem beispielhaften duty cycle von 50 und 75%. Die Figuren 2D1 und D2 zeigen dieselbe periodische Energieübertragung wie bei den Figuren 2B1 und B2, ausser dass die Ansteuerspannung unterhalb der Maximalansteuerspannung liegt, was durchaus auch eine Möglichkeit zum Erreichen des besten Wirkungsgrads ist.

### Bezugszeichenliste

- 1: Schema Wireless Power Transfer (WPT)
- 2: Primärseite
- 3: Sekundärseite
- 4: Spule Primärseite
- 5: Spule und Gleichrichter Sekundärseite
- 6: Energieübertragung (Wireless Power Transfer (WPT))
- 7: Speicher / Kondensator
- 8: ADC (Analog Digital Wandler) zur Messung der Ladespannung / des Ladezustands
- 9: MCU (Micro Control Unit), Control logic / WPT on/off
- 10: Kontaklose Schnittstelle / Datenübermittlung
- 11: Ansteuereinheit für Spule Primärseite
- 12: Einheit zur Übermittlung der Daten und Anforderung der Leistung
- 13: Einheit zum Empfang der Daten und Anforderung der Leistung

## Patentansprüche

1. Verfahren zur optimierten drahtlosen Energieübertragung (6) zwischen zwei Spulen (4, 5), durch Übertragen von Energie einer Spule (4) einer Primärseite (2) an eine Spule (5) auf einer Sekundärseite (3), wobei mittels eines ADCs (8) eine, an einem auf der Sekundärseite (3) angeordneten Speicher / Kondensator (7), vorliegende Ladespannung bzw. der Ladezustand ermittelt wird, **dadurch gekennzeichnet, dass** eine MCU (9) an die Primärseite (2) über eine Datenschnittstelle (10) eine Energieanforderung aufgrund der am sekundärseitigen Speicher / Kondensator (7) vorliegenden Ladespannung übermittelt und aufgrund dessen die Energieübertragung zwischen der Primärseite (2) und der Sekundärseite (3) geregelt wird.

2. Verfahren nach Anspruch 1, **dadurch gekennzeichnet, dass** die MCU (9) ein Signal zur maximalen Leistungslieferung bzw. Energieübertragung (6) oder zum Pausieren der Energieübertragung an die Primärseite (2) aufgrund des Ladezustands bzw. der vorliegenden Ladespannung des Speichers / Kondensators (7) übermittelt.

3. Verfahren nach einem der Ansprüche 1 oder 2, **dadurch gekennzeichnet, dass** die Energieübertragung (6) von der Primärseite (2) auf die Sekundärseite (3) konstant mittels maximaler Leistung erfolgt.

4. Verfahren nach Anspruch 2, **dadurch gekennzeichnet, dass** während des Pausierens keine Energieübertragung erfolgt.

5. Verfahren nach einem der Ansprüche 1oder 2, **dadurch gekennzeichnet, dass** die MCU (9) aufgrund des Ladezustands des Speichers / Kondensators (7) der Sekundärseite (3) eine Energieanforderung an die Primärseite (2) übermittelt, wobei die zu liefernde Leistungsmenge über einen duty cycle, der periodisch Energie überträgt und unterbricht, geregelt wird.

6. Verfahren nach Anspruch 5, **dadurch gekennzeichnet, dass** der duty cycle einen Toleranzbereich (eine Schwankung) von +/- 10% zulässt, vorzugsweise +/- 5%.

7. Verfahren gemäss Anspruch 1 bis 6, **dadurch gekennzeichnet, dass** die MCU (9) aufgrund des Ladezustands des Speichers / Kondensators (7) der Sekundärseite (2) eine Energieanforderung an die Primärseite (3) übermittelt, wobei die zu liefernde Leistungsmenge über die Ansteuerspannung der Spule (4) geregelt wird.

8. Verfahren gemäss Anspruch 1 bis 7, **dadurch gekennzeichnet, dass** das Verfahren zur drahtlosen Energieübertragung (6) zwischen den in Spulen (4, 5) für den Betrieb eines Sensors, Aktuators und/oder Controllers eingesetzt wird.

9. Verfahren gemäss Anspruch 1 bis 8, **dadurch gekennzeichnet, dass** die MCU (9) unteranderem aufgrund des Frequenzbereichs, des Spannungsbereichs oder des Leistungsbereichs die entsprechende Ausführungsform des Verfahrens der Energieübertragung definiert und anwendet.
